(19) Europäisches Patentamt

European Patent Office

Office européen des brevets

(11) EP 1 511 234 B1

(12) EUROPEAN PATENT SPECIFICATION

(45) Date of publication and mention
of the grant of the patent:
**31.05.2006 Bulletin 2006/22**

(51) Int Cl.:
***H04L 12/56*** (2006.01)

(21) Application number: 03292087.8

(22) Date of filing: **25.08.2003**

(54) **Method and apparatus for adjusting a control message time period in communication networks**

Verfahren und Vorrichtung zur Steuerung von einer Kontrollmitteilungszeitperiode in Kommunikationsnetzen

Méthode et dispositif pour ajuster une période de temps pour l'envoi de messages de contrôle dans des réseaux de communication

(84) Designated Contracting States:
**DE FR GB**

(43) Date of publication of application:
**02.03.2005 Bulletin 2005/09**

(73) Proprietor: **Hitachi, Ltd.**
**Chiyoda-ku,**
**Tokyo 100-8280 (JP)**

(72) Inventors:
• **Yoshimoto, Akio**
**06110 Le Cannet (FR)**
• **Hayashi, Masato**
**06400 Cannes (FR)**

(74) Representative: **Beetz & Partner**
**Steinsdorfstrasse 10**
**80538 München (DE)**

(56) References cited:
• **ROYER E M ET AL: "A REVIEW OF CURRENT ROUTING PROTOCOLS FOR AD HOC MOBILE WIRELESS NETWORKS" IEEE PERSONAL COMMUNICATIONS, IEEE COMMUNICATIONS SOCIETY, US, vol. 6, no. 2, April 1999 (1999-04), pages 46-55, XP000823968 ISSN: 1070-9916**

## Description

The present invention relates to a method and an apparatus for adjusting a control message time period used for sending control messages to other network nodes in communication networks which include a plurality of network nodes.

In a communication network, control messages are exchanged between network nodes. For example in routing protocols, network nodes send periodically control messages to other network nodes in order to inform their neighbors in the network about their own existence. "Hello" messages are used, for instance, by routing protocols such as the ad-hoc on-demand distance vector (AODV) routing or the optimized link state routing (OLSR). These routing protocols use control messages to detect neighbor nodes in the communication network with which a network node has a direct network link. Transmitted "Hello" messages are received by all one-hop neighbors in the network, but are not forwarded to other nodes. Thus, "Hello" messages enable each node to discover its direct neighbors. Each node of the network maintains topological information about the network obtained by means of the received control messages. Based on the network information, a node can compute routes to destination nodes in the network.

Examples can be found in XP823968 :" A Review of Current Routing Protocols for Ad Hoc Mobile Wireless Networks."

With the increasing popularity of wireless networks there is an increasing need to manage mobility. A mobile ad-hoc network (MANET) is a collection of mobile nodes that communicate using a wireless medium, thereby forming an autonomous network. In a MANET no centralized access point or preexisting infrastructure exists. In order to communicate with another node, a network node either uses a direct wireless link or a multi-hop route to reach the destination. Accordingly, the nodes usually incorporate routing capabilities. The network may be connected permanently or temporally to other networks, *e. g.*, via gateways. Such MANETs have dynamic, random, sometimes rapidly changing topologies, limited bandwidth, variable throughput links, and the nodes have limited battery power.

MANET nodes are usually equipped with wireless transmitters and receivers. Depending on the nodes' positions and their transmitter and receiver coverage patterns, a wireless connectivity in the form of a random, multi-hop graph for the ad-hoc network emerges. This ad-hoc topology may vary with time as the nodes change their positions and/or are activated or deactivated. Due to the potentially rapidly changing network topology, control messages for neighbor discovery should be exchanged between network nodes based on a short time period. However, because of the limited bandwidth of radio links the frequent transmission of control messages impairs the available network capacity, reduces network efficiency and requires much battery power.

At present, network nodes in many communication networks periodically generate control packets, such as "Hello" or "Beacon" packets, in order to inform their neighbors about their own existence and active communication links. Usually, the routing software periodically maintains tables in order to keep the information up to date. Short control packet intervals enable a fast detection of node movements and routing tables established by the routing protocol may be quickly adapted to the network topology. However, frequent control packet transmission requires much network bandwidth and battery power. Fewer resources are consumed with long control message intervals but changes in network topology, *e. g.*, by a repositioning of MANET nodes may not be detected fast enough.

For example, when a node is moving fast in an OLSR ad-hoc network, its neighborhood changes quickly and the default "Hello" frequency in OLSR is not sufficient to track the node motion. Therefore, routes to this node become inactive and messages sent to this node on one of these routes may be lost.

It is therefore an object of the present invention to provide a method and an apparatus for dynamically adjusting a control message time period used for sending control messages to network nodes in the communication network.

The above object is achieved by the independent claims. The dependent claims refer to preferred embodiments of the invention.

In a method for adjusting a control message time period P according to the present invention, control messages are exchanged between network nodes. A network node may obtain information on other network nodes in the network and on the network topology based on received control messages. For example, based on received "Hello" messages, a node may infer its present one-hop neighbors. If control messages further include information on direct neighbors of the sending node, the receiving node is furthermore able to detect the network nodes in its two-hop neighborhood.

The method according to the invention may further comprise the determination of a network condition NC of at least part of the communication network. The network condition NC may indicate a stability criteria regarding to the network topology. The network condition NC is preferably correlated to changes in the communication network, *e. g.*, caused by network membership changes or the movement of network nodes. The network condition NC may indicate the network stability of the entire communication network or of a part of the communication network. This is particularly useful to determine a local network condition, *e. g.*, the stability of a localized area of the communication network. In a large communication network, local changes in the network topology, *e. g.*, when a new node enters or leaves the area of an ad-hoc mobile network, may be detected in order to determine the network condition NC. The network condition NC may be a binary value indicating a stable or unstable network condition. Alternatively, the network condition NC may also be a numerical value indicating a degree of network stability. In this case, the network stability may indicate *e.g.*, a very stable, a partially stable, an intermediate, a partially unstable, or an unstable network condition.

According to the invention, the control message time period P used for sending control messages to other network nodes is adjusted based on the determined network condition NC. The adjustment may correspond to the determined network condition NC, *e. g.*, by exploiting a correlation between the determined network stability and the control message time period P. This enables a dynamic adaptation of the frequency used to send control messages to network nodes. If the network topology is stable and detected network links are preserved for a longer period of time (*e.g.*, no network node in a mobile environment is moving), the determined network condition NC indicates a stable network and, accordingly, it is sufficient to send control messages like "Hello" packets infrequently. However, if the network is changing rapidly (*e.g.*, because network nodes are moving fast), this unstable network condition requires a frequent exchange of control messages to enable a quick update of network topological information, such as neighbors' tables of ad-hoc routing protocols.

The method according to the invention enables a network node to adjust its control message sending period P in a dynamic manner according to the current network situation. The traffic induced by the control messages is tuned to actual note mobility such that fast node movements may be tracked. When there is no mobility, the control traffic overhead is low and the control message frequency is appropriately increased as node mobility increases. A control message in the sense of this invention is any information which is exchanged between network nodes and which may be used by nodes to derive information on other network nodes, network links and/or network topology. In preferred embodiments, "Hello" or "Beacon" packets are employed as control messages.

The network condition NC is preferably determined based on control messages received from other network nodes in the communication network. Since control messages are used by many routing protocols to exchange control information between network nodes, received control messages include information on the structure and/or situation of the network, in particular on neighbor nodes (nodes which have a direct link to the receiving node) and/or neighbors of the sending node. Thus, information on the network topology, network members, and/or network stability may be derived from control messages. Based on received control messages, a network node may determine the stability of the network and adjust its control message time period P for itself sending control messages to other network nodes.

The determination of the network condition NC may comprise the detection of a change in network membership. In particular, the detection of a new network node and/or the leaving of a network node indicate a change in the network membership. This is particularly useful for ad-hoc networks where the network topology dynamically emerges from the collection of participating mobile nodes. Network membership changes may result, for example, from node movement and affect the network topology. This results in a network condition which is not stable and requires frequent routing information updates. When a network membership change is detected, the control message time period P of a network node may be adjusted, respectively.

According to an embodiment of the invention, the network condition NC may preferably be determined based on received control message time periods $P_i$ of other network nodes. Based a network condition determined in that way, the control message sending period P of a network node may be adjusted. This has the advantage that a network node may adjust its own sending time period P according to the sending time periods $P_i$ of other nodes in the network. If, for example, a network node detects an unstable network condition NC, it adjusts its sending time period $P_i$ according to the detected network condition. By transmitting its time period $P_i$ to other network nodes, more network nodes may adjust their respective sending time periods, although they have not itself detected the reason for the network condition change. This is particularly useful in large communication networks when one network node in one part of the network detects a network membership change, *e.g.*, by detecting a new node in its radio transmission area, and adjusting its sending time period accordingly. Since the new network node, which has entered the coverage area of the mobile ad-hoc network and thereby has caused an unstable network condition to be determined in one network node, is likely to further move around and, thus, further effecting the network topology, it is also suitable for other network nodes to adjust their respective control message sending periods. This is because, if the new node continues its movement, it probably will also enter the radio coverage of other network nodes. If these nodes take over the unstable network condition by detecting that other network nodes have already changed their control message sending time periods, other network nodes may also adapt their control message time periods accordingly. Thus, the sensitivity for changes in the communication network is increased and the control message sending time periods of other nodes in the network may be adjusted according to a detected local network condition.

In order to ensure that the adjusted control message time period P needs certain conditions, it is suitable to limit the adjustment so that the adjusted sending time period P falls within a predetermined range. This allows setting an upper limit and a lower limit for the time period so that given conditions are satisfied. The lower limit $P_{min}$ for the sending time period P determines the most frequent transmission of control messages via the communication network and, hence, the maximum value of control traffic overhead. The upper limit $P_{max}$ of the sending time period P determines largest time intervals for sending control messages and, thus, the time required for detecting a new network node. The upper limit $P_{max}$ also determines the bandwidth consumed by control packets in the condition that no changes in network topology happen. Furthermore, the sensitivity to neighbor changes is reduced for larger $P_{max}$. Considering the size of the ad-hoc network and the radio coverage patterns, the lower limit $P_{min}$ or the smallest control message interval, respectively, also determines the maximum velocity of network nodes moving in the ad-hoc network which can be detected and tracked.

When a change in the network condition NC is detected, thus indicating some changes in the network, the control message time period P may be reset to a predetermined value. For example, if the network condition changes towards a value indicating a more stable network, the sending time period for control messages may be enlarged, *e.g.,* by setting to the maximum value $P_{max}$. If the network condition changes towards a value indicating a more unstable network, it is preferred to reduce the sending time period P for control messages in order to allow a fast determination of network neighbors and/or network topology. This can be achieved, *e. g.*, by setting the time period P to its minimum value $P_{min}$.

According to an embodiment of the invention, the control message time period P may be increased as long as the network condition NC is stable. In this case, the network condition NC indicates that no changes in the network, *i.e.*, the network membership and/or network topology, occurred so that it is safe to assume that the available network links are preserved and further active. This means that there is no indication of mobility and there is no need for frequent transmission of control messages to re-identify the stable network topology. Accordingly, the sending time period P may be increased in order to reduce the control traffic overhead. This reduces the control traffic bandwidth and improves network efficiency. Also, the computational load and battery consumption of network nodes is reduced.

Preferably, the control message time period P may be increased by subsequently multiplying the current time period P with a coefficient C in order to obtain the adjusted time period. The coefficient C may be a constant, preferably larger than one, in order to receive an increasing sequence of time intervals. The coefficient C may also be variable and changing during the adjustment process, *e. g.*, depending on the network condition NC. This allows fast changes in the sending time period P when a very stable network condition NC is determined and a moderate increase, if a medium stable degree of network stability is detected.

In usual routing protocols, such as OLSR, the reception of a new control message from a network node is expected within a time interval determined by the sending time period $P_i$ of the sending node times a packet holding constant K. To allow a sending delay, a processing delay and/or a control packet loss before the respective table entry for the sending node in the routing table is deleted, a packet holding constant K = 3 is usually recommended for "Hello" packets by OLSR.

In order to keep the reliability of control message transmissions unchanged, a maximum number of control packet losses should not be exceeded. Accordingly, it is preferred to adjust control message time period P gradually according to the condition that the maximum permissible number of control packet losses is satisfied.

Because according to preferred embodiments of the present invention the sending time period P is enlarged step by step, the reliability of control packet transmissions is maintained, if K - 1 control packets are generated and transmitted during the interval of K · P. Thus, the coefficient C should satisfy the following condition:

$$\sum_{n=0}^{K-2} C^n < K$$

Increasing the sending time period P by repeatedly multiplying its previous value with constant C such that the above equation is satisfied has the advantage that, although the sending period P is enlarged as long as the network condition NC is stable, the number of control packets sent within the time interval K · P is maintained so that, assuming a fixed packet loss rate in the network, the same number of control packets is expected to be received by other nodes. Thus, the reliability of control packet transmission is not changed.

When the network condition NC degrades, which indicates some instability in the network, *e.g.*, network membership or topology changes, the control message time period P may be decreased in order to send control messages more frequently. Due to the reduced sending time interval P, a new node entering the area of the ad-hoc network has an increased opportunity to pick up control messages and, therefore, detecting network neighbors and the network topology more quickly. This shortens the time required for linking the new node to the ad-hoc network and for establishing communication with other network members. Network condition degradation may be determined, when a control message from a new network node is received for which no control message has been received before. In this case, it is very likely that a mobile node has entered the receiving radio coverage of the receiving node which in turn now receives control messages from the new node. A degradation of the network condition may also be determined when no control message has been received from a particular node for a certain amount of time. In this case, it is very likely that the other node left the radio coverage area of the receiving node or has been shut off. In both cases, the network topology has changed and the network stability is disturbed. The respective entry for the disappearing node in the routing table is deleted in known routing protocols. In an embodiment of the present invention, the detection of a disappearing node may also be used as an indication of network instability and, therefore, the control message sending time period P may be reduced accordingly.

In order to adjust the sending time period P for control messages of a node according to control message time periods $P_i$ of other network nodes, the node may compare its own time period P with received time periods $P_i$ of other network nodes. If any received time period $P_i$ is smaller than the nodes' own time period P, the node may adjust, in particular reduce, its own time period P. In one preferred embodiment of the invention, a network node sets its sending time period P to the minimum value of the received time periods $P_i$ and its own previous time period P. This has the advantage that, if one network node detects some network instability and reduces its sending time period $P_i$, other network nodes may also reduce their sending time periods. Thus, frequent control messages are sent by many nodes in the mobile ad-hoc network so that movements and respective network topology changes may be detected fast.

A node may comprise a neighbor table for storing information relating to a neighboring network node in the communication network. The respective information relating to a neighbor relation to a network node may be inferred from received control messages. The information stored in the neighbor table is preferably used to derive information regarding the network topology. This information is essential for determining the routing of packets in most routing algorithms. A new network node may be detected by comparing the originator identification of a received control message with entries in the neighbor table. If no entry having the same identification as the received packet is located in the neighbor table, it is inferred that no control message from the respective network node has been received before, thus, indicating a new network node having appeared in the communication network.

The transmitted control message may include time information from the sending node concerning the control message time period $P_i$ of the sending node. Thus, a node receiving the control message may calculate the sending time period $P_i$ of the sending node. This allows different sending time periods for individual network nodes in the communication network and gives additional flexibility. For example, sending time periods $P_i$ may be transmitted in "Hello" control packets by using the "Hello" interval extension of the "Hello" packet format. However, it is also possible to transmit the time information concerning the control message time period P separately from the control messages. A receiving node may store the received time information or the respective sending time period of neighbor nodes, *e.g.*, in the neighbor table.

The method according to the invention may further comprise the calculation of an expiration time $T_i$ for stored neighbor relation information. The expiration time $T_i$ may be calculated based on stored time information of the respective node included in received control messages from this node such as the respective control message time period P of the sending node. The expiration time $T_i$ of stored neighbor relation information may, for example, be an absolute time value which is calculated based on several times the sending time period P of the sending node. Preferably, the expiration time $T_i$ is determined by $T_i = T_{rcv} + K \cdot P_i$, wherein $T_{rcv}$ is the time when the last control message from the respective node has been received.

Neighbor relation information relating to a network node may be deleted, if no new control message is received from the node before the respective expiration time $T_i$ expires. This bears the opportunity to remove neighbor relation information which may be outdated and has not been confirmed for a while. If a node leaves the ad-hoc network, either by moving out of the ad-hoc network area or by being shut off, information relating to this node may be deleted reflecting the disappearance of the network link so that it is not used by the routing algorithm anymore.

The determination of the network condition NC may further comprise the detection of a movement of the network node. This may achieved by a movement detection sensor, such as a gravity sensor, a GPS system, or a speedometer. The detection of its own movement indicates a network node in a mobile ad-hoc network that the network topology is going to be changed because of the node's repositioning. Therefore, the network condition NC may be set such that it indicates an unstable network. Accordingly, it is advantageous to adjust the control message time period P of the node dependent on the detected movement. Preferably, the sending time period P is reduced, thus, sending control messages more frequently to allow other network nodes to detect the repositioning of the moving node more quickly. According to this embodiment of the invention, a moving mode automatically increases the frequency of sending control messages to other network nodes so that its linkage to the ad-hoc network is improved by increasing the chances of detecting its presence, location and/or movement for other nodes. Thus, the present invention improves the reliability of network connections for moving network nodes in an ad-hoc network and reduces the probability of lost packets. Because the control message traffic is only increased, if necessary, the average bandwidth available for user data is hardly reduced.

According to a preferred embodiment of the invention, the network condition is determined according to the detected speed of movement of the network node. A value of the network condition indicating an expected degree of change or instability of the network may be determined based on the detected speed. This value may then be used to determine the degree of adjustment for the sending time period P of the moving network node.

For example, a fast moving network node may set its sending time period P to a very short value while a slow moving network node may use a longer time interval P. This has the advantage that the sending time period P is automatically adjusted according to the speed of the moving network node.

The method according to the invention may preferably be used in a routing protocol to determine information relating to neighbor nodes in the communication network, in particular to maintain the neighbor table used for routing purposes. The method has the advantage that, when some changes in the network are detected, the sending time period for control messages is reduced so as to receive a fast response on changing network conditions and/or topologies. Furthermore, since the rate of sending control messages is reduced only when necessary and the sending time interval is increased when the network is stable, the required bandwidth allocated for control message traffic is minimized. This results in optimizing the efficiency of the communication network and maximizing the network throughput.

An apparatus for adjusting a control message time period P used for sending control messages to other network nodes in the communication network comprises receiving means adapted to receive control messages from other network nodes. The received control messages may be used to determine neighbor relations to the originator of the message. Based on the determined neighbor relations it is possible to infer the network topology and to determine routes to destination nodes in the communication network. Information relating to neighboring network nodes may be stored in a neighbor table which can be used by the routing algorithm.

The apparatus according to the invention may further comprise network condition determining means adapted to determine a network condition NC of at least part of the communication network. The network condition NC preferably indicates changes in the communication network, in particular, changes in network node membership and/or network topology. In a mobile ad-hoc network, the determined network condition may relate to changes in the network nodes forming the ad-hoc network. In large communication networks, the network condition may relate to the local stability of parts of the communication network.

The network condition determining means may determine the network condition NC based on received control messages. This allows determining the network condition depending on information relating to the network topology, such as information on other nodes in the network. The network condition may preferably be determined based upon information relating to changes in network membership. This is particularly useful for ad-hoc mobile networks wherein the network topology is determined by the capabilities and positions of participating network nodes. The detection of a new node and/or a leaving node indicates a change in node membership of the network and, possibly, changes in the network topology.

Furthermore, control means adapted to adjust the control message time period P of the network node based on the determined network condition NC are provided. By dynamically adjusting the sending time period P for control messages, it is possible to adapt the control message sending rate to the currently detected network condition NC. In a situation where changes in the network are detected, *i.e.*, the network is instable, the sending time period P for control messages of the node may be reduced so that frequent control messages are sent to other network nodes. This enables the other nodes to detect the neighboring nodes in the network in a short time and, thus, respond quickly to network (topology) changes. In case of a stable network condition NC, the control message time period P may be increased to reduce the control traffic overhead.

The control means may adjust the control message time period P, gradually, step by step, so that the reliability of control message transmission in the communication network is preserved. This may preferably be achieved, if within a certain time period, within which a node expects to receive at least one control message, the number of control messages sent to other network nodes is maintained, although the sending time interval $P_i$ is increased.

An apparatus according to the invention may further comprise sending means adapted to send control messages to neighbor nodes and timer means adapted to trigger the sending means for sending of control messages each time the time period P lasts. The timer means may comprise a programmable timer for triggering devices according to the programmed time. The timer means are rescheduled after triggering the sending means according to the current control message time period P. This provides an ongoing sending of control messages based on a timing schedule according to the adjusted sending time period P.

According to a preferred embodiment, the apparatus further comprises table maintenance means adapted to delete neighbor table entries having an expired expiration time $T_i$. This has the advantage that neighbor table entries are automatically deleted, if no confirmation for the respective entry has been received within the expiration time $T_i$ of the entry. The respective expiration time $T_i$ may be calculated based on information considering the sending time period $P_i$ for control packets of the corresponding network node.

An apparatus according to the invention may be realized in hardware and/or software components. The apparatus may be a component of a network node, *e. g.*, a router and/or terminal in a wired or mobile communication network. The network may be infrastructure-based, such as a GSM communication network, or an ad-hoc network formed by participating nodes.

Although the invention is described in consideration of mobile ad-hoc networks it is not restricted thereto. It may also usefully be applied to other communication networks having varying network conditions. In particular, if network nodes or network links are unstable resulting in a dynamic network topology which changes with time, it is useful to adjust the sending time interval for control messages according to the present invention. This applies, in particular, to any kind of wireless communication network.

These and other potential objects, features and advantages of the present invention will appear more fully from the following description of the examples for embodiments of the invention. It is to be understood, however, that the scope of the present invention is not limited by any one embodiment shown in the accompanying drawings.

Fig. 1 shows schematically an apparatus for adjusting a control message time period P used for sending control messages to other nodes.

Fig. 2A shows schematically a configuration in an ad-hoc network.

Fig. 2B illustrates schematically how a network node maintains a neighbor node table.

Fig. 3A, B shows schematically situations in an ad-hoc network.

Fig. 4 shows schematically the extended "Hello" packet format for the AODV routing protocol.

Fig. 5 shows schematically a neighbor table to store information relating to neighboring network nodes.

Fig. 6 shows schematically a block diagram illustrating an embodiment of the present invention.

Fig. 7 shows schematically a state chart diagram for the operation of the sending means according to an embodiment of the invention.

Fig. 8 shows a flow diagram of the control process performed by the sending means in the sending state according to an embodiment of the invention.

Fig. 9 shows a flow diagram illustrating schematically the control flow performed by the receive module.

Fig. 10 shows schematically a flow diagram for the recalculation of the time period P.

Fig. 11 shows a flow diagram of the timer process according to an embodiment of the invention.

Fig. 12 shows schematically a flow diagram of the table maintenance module control process according to an embodiment of the invention.

Fig. 13 shows a flow diagram illustrating schematically the process performed when a movement of the network node is detected.

Fig. 14 shows schematically the process performed in the terminating state of the send module.

Fig. 15 shows schematically a block diagram of the hardware structure of an embodiment of the present invention.

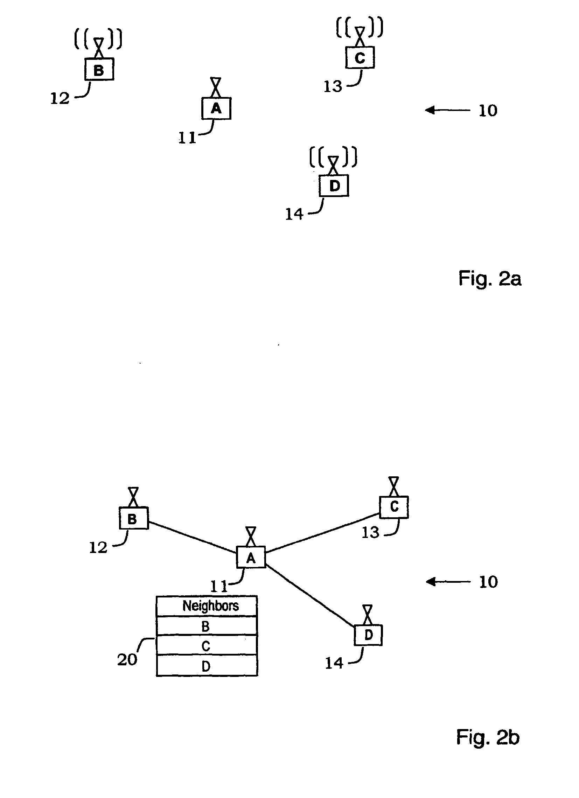

Fig. 2A shows schematically a configuration in an ad-hoc network 10 comprising the network nodes A-D 11-14. In the depicted situation, nodes B-D 12-14 are sending (broadcasting) "Hello" control packets. Node A 11 receives the "Hello" packets from nodes B-D.

Fig. 2B illustrates schematically how the network node A maintains a neighbor node table 20 and infers the network topology based on received control messages. Node A receives control messages from nodes B-D and shows respective information relating to these network neighbors in its neighbor table 20. Since "Hello" packets are not relayed by receiving nodes, *i.e.*, they are transmitted only on direct network links (one-hop links), network node A learns from the received control messages the identity of its direct (one-hop) neighbors and infers information on the emerging ad-hoc network topology.

The information stored in the neighbor table 20 is used by a routing algorithm to determine network paths to destination nodes. This process of creating and maintaining a neighbor table 20 is performed independently in each network node. In order to keep the neighbor table 20 and the routing information up to date, the entries in the neighbor table 20 are monitored periodically.

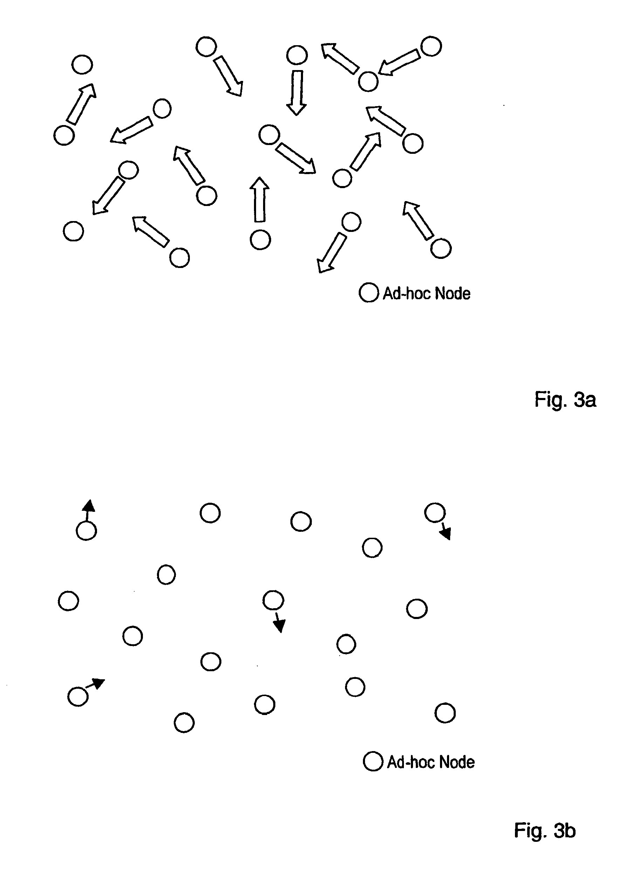

Fig. 3A shows schematically a situation in an ad-hoc network wherein the ad-hoc network nodes are moving fast resulting in an instable network topology. In order to establish a smooth communication (including hand-overs) between the network nodes in the changing network, the sending period for control messages ("Hello" packets) should be set short. This allows quick updating of neighbor tables of the ad-hoc routing protocol so that the nodes can continuously determine the network topology. Based on the updated neighbors table, the routing algorithm can dynamically determine routes to destination nodes.

Fig. 3B shows schematically the situation in an ad-hoc network, wherein only little movement of a few network nodes occurs. This results in a stable network, wherein the neighbor relations of the nodes and the network topology change only slowly. In order to reduce resources consumed by the routing protocol, *e. g.*, control message traffic, a larger value for the control message sending time period may be set. However, the situation shown in Fig. 3B may change abruptly to that of Fig. 3A so that a dynamic adjustment of the control message time period P is necessary.

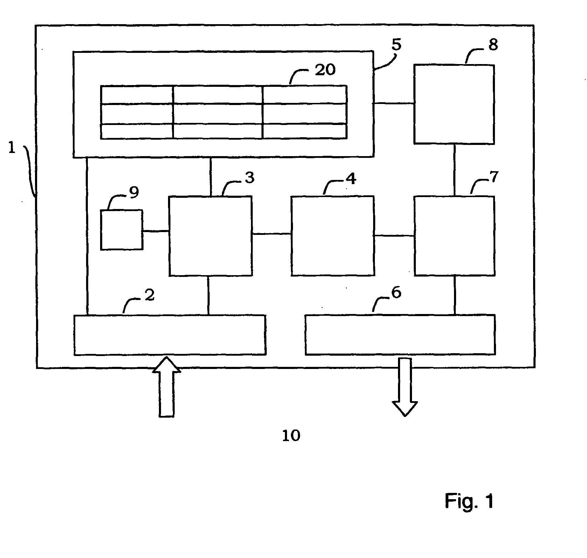

Fig. 1 shows schematically an apparatus for adjusting a control message time period P used for sending control messages to other network nodes 12-14 in communication networks such as a mobile ad-hoc network.

Receiving means 2 receive control messages such as "Hello" packets which have been sent from other network nodes via the communication network 10. Based on the received control messages, a network condition determining means 3 determines a network condition NC of a part of the communication network 10. This local network condition NC indicates the degree of stability in the part of the communication network 10 to which the apparatus 1 belongs. The part of the communication network 10 affecting the local network condition NC comprises, *e. g.*, a group of mobile network nodes forming an ad-hoc network. The network condition NC is determined based on the detection of changes in network membership such as the detection of a new network node in the ad-hoc network and/or a node leaving the ad-hoc network. Thus, the network condition NC determined by the network condition determining means 3 reflects the degree of change or stability in the communication network 10. The network condition NC may have a binary value indicating a stable or unstable network, or it may be a numerical value indicating different degrees of stability in the network (topology), *e. g.*, unstable, somewhat unstable, mostly stable, and stable.

Based on the determined network condition NC, control means 4 adjust the control message time period P. If the network condition NC indicates a stable communication network or a stable part of a communication network 10, the control means 4 increase the control message time period P so as to send control messages less frequently and to reduce the control message traffic overhead in the communication network 10. If the network condition NC indicates an unstable network 10 or an unstable part of the network 10, the control means 4 reduce the control message time period P so as to send control messages more frequently. This allows other nodes 12-14 in the communication network 10 to detect the presence of the network node 11 comprising the apparatus 1 and to update the respective neighbor/routing tables faster.

Storing means 5 are configured to hold a neighbor table 20 to store information relating to neighboring network nodes. The information stored in the neighbor table 20 is used to determine the identity of neighboring nodes 12-14, that is nodes being directly accessible in the network 10 within a one-hop communication link. The neighbor information is also used to determine the network topology which is determined by the neighboring relations between network nodes 11-14. In an ad-hoc mobile communication network, a unidirectional or bi-directional communication link is established between neighboring nodes. The neighbor table 20 is further used by the routing algorithm to determine a route to a destination node in the network.

A new network node is detected by the network condition determining means 3 by comparing a received control message with entries in the neighbor table 20. If no entry for the respective network node is found in the neighbor table, a new network node and, thus, a change network membership/topology is inferred.

Entries corresponding to nodes for which no "Hello" packet has been arrived within a certain period of time are deleted from the table. Thus, each entry must be confirmed within an expiration time $T_i$ of the entry. According to known routing protocols, the table entry expiration time is calculated based on the last time $T_{last}$ a control message from the respective node has been received and a predetermined fixed expiration period. This expiration period is set such that some losses of control packets are allowed before the respective entry in the neighbor table 20 is deleted. For example, the expiration period is set to a constant K (packing holding constant) times the control message sending period $P_i$ of the sending network node. In order to allow a control packet loss, processing delay and/or random delay for sending, K = 3 is recommended by OLSR. This allows some reliability of the control messages exchange although an unreliable packet transmission, such as UDP is utilized. On the other hand, the packet holding constant K should not be set to a large number in order to detect a link disconnection fast enough. According to usual routing protocols, the sending time period for control messages and the expiration period are fixed and identical for all network nodes.

Thus, in order to keep the neighbor table entries up to date, an expiration time $T_i$ for each entry is calculated and stored in the neighbor table 20. Table maintenance means 8 delete neighbor table entries having an expired expiration time $T_i$. This is performed periodically to remove outdated neighbor table entries which have not received confirmation within its respective expiration time $T_i$. The table maintenance means 8 are triggered periodically by timer means 7.

Sending means 6 are provided to send control messages via the communication network 10 to other network nodes 12-14. The sending of control messages is usually performed by broadcasting control packets within a one-hop area in the communication network 10. The sending means 6 are triggered for sending of control messages by timer means 7 each time the sending time period P lapsed. After triggering the sending means 6, the timer means 7 are rescheduled according to the current value of the control message time period P. Thus, a continuous sequence of control messages is transmitted based on the adjusted control message time period P. Since the sending time period P is adapted according to the detected degree of network stability, the control message traffic is reduced.

The control means 4 compares its own sending time period P with time periods $P_i$ received with control messages from other network nodes. The time periods $P_i$ are stored in respective entries in the neighbor table 20 corresponding to the sending network node. If any received time period $P_i$ is smaller than the own time period P, the control means 4 reduce the sending time period P.

A movement detection sensor 9 detects the movement of the apparatus 1. Depending on the detected movement, the control message time period P is adjusted. If the apparatus is in motion, the sending time period P is reduced in order to send control message more frequently. This helps other network nodes to detect changes in the network caused by the moving network node 11.

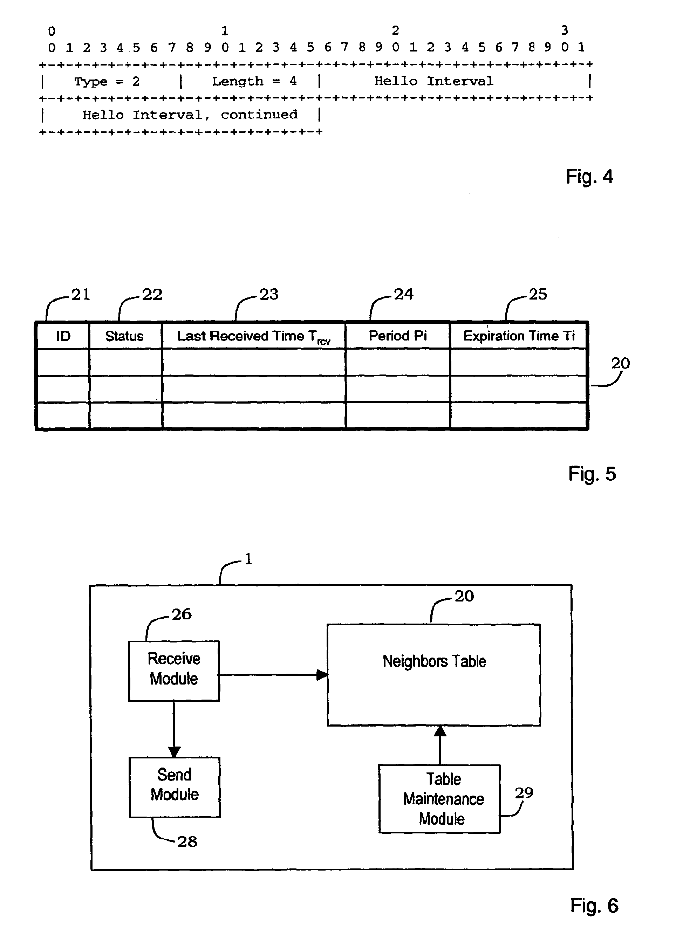

Fig. 4 shows schematically the extended "Hello" packet format for the AODV routing protocol. The "Hello" interval field in the "Hello" packet format indicates the number of milliseconds between successive transmissions of the "Hello" message. In usual network protocols this "Hello" interval is set to a fixed number, *e. g.* one second, and identical for all network nodes 11-14. The "Hello" interval extension may be appended to a RREP message with TTL = 1 to be used by a neighboring receiver in determining how long to wait for subsequent control messages.

A similar field is reserved for exchanging "Hello" emission intervals in other routing protocols such as the OLSR V8 "Hello" packet format. In the H time field of this control message format, information relating to the "Hello" emission interval of the sending node is provided. The "Hello" packet sending time interval of the sending node may be calculated by the receiver based on the received information.

Fig. 5 shows schematically a neighbor table 20 to store information relating to neighboring network nodes. In the ID field 21 the IP address of the node sending the respective control messages is recorded. For every node in the communication network 10 for which control messages are received an entry (row) in the neighbor table 20 is created and maintained.

The optional status field 22 contains information relating to the status of the communication link to the respective network node. It may depend on the corresponding routing protocol and, *e. g.*, may comprise information on the link quality such as the number of lost packets.

The last packet received time field 23 contains information on the time $T_{rcv}$ of the last received control packet from the respective network node. The sending time period $P_i$ of "Hello" packets of the respective network node is registered in the period field 24. This information may be derived from received "Hello" packets using the "Hello" interval field of the "Hello" packet format as shown in Fig. 4.

In the expiration time field 25 the expiration time $T_i$ of the entry is listed. The expiration time $T_i$ is the holding time of the information listed in the neighbor table 20 relating to the respective network node. If no new control message confirming the entry is received within the expiration time $T_i$ the disconnection of the network link is assumed. In this case, the entry is deleted by the table maintenance means 8. According to known routing protocols, in order to allow some losses of control packets, the expiration time $T_i$ of entry i is calculated according to the following equation:

$$T_i = T_{rcv} + K \cdot P_i,$$

wherein K = 3 is recommended by OLSR.

According to the present invention, the sending time period P for control messages of a network node is adjusted within a predetermined range. For example, P is tuned between the minimum period $P_{min}$ = 1000 milliseconds and a maximum period $P_{max}$ = 5000 milliseconds. As long as the detected network condition is stable, the control message time period P is increased, preferably by multiplying the present period P by a period tuning constant C resulting in a new, updated sending time period P.

In order to maintain the control message transmission reliability, a maximum permissible number of control packet losses should not be exceeded. Assuming a fixed loss rate for control packets, the number of control packets sent within the expiration time T of the node is maintained. This means that the sending time period can be enlarged step by step as long as the same number of control packets is transmitted within the expiration time T. In other words, during the interval of K · P a number of (K - 1) "Hello" packets must be transmitted. Accordingly, the period tuning constant C must satisfy the condition:

$$\sum_{n=0}^{K-2} C^n < K$$

For example for K = 3, C = 1,1 satisfies the above condition and may be used to increase the sending time period P stepwise. This results in an increasing sequence of control message sending intervals reducing the control message traffic gradually as long as the network condition NC indicates no changes in the network. If a change in the network is indicated by the network condition NC the control message sending time period P of the node is reduced, *e. g.*, reset to the minimum period $P_{min}$.

Fig. 6 shows schematically a block diagram illustrating an embodiment of the present invention. A receive module 26 receives control messages via network interface from the communication network 10. The receive module 26 processes and interprets received control messages. The receive module 26 adds and/or updates neighbor information entries in the neighbors table 20 based on the received control messages. The receive module 26 further adjusts the control message time period P according to information received with the control messages indicating the sending periods $P_i$ of other network nodes.

A send module 28 operates based on the adjusted time period P and sends control messages to other network nodes. A table maintenance module 29 maintains entries in the neighbors table 20 and deletes entries having an expired expiration time Ti.

The shown embodiment has the advantage of independently running modules which operate event driven. Thus, this embodiment may preferably be implemented by means of one or more computer programs which are processed by one or more CPUs. Preferably, each module is implemented as a separate process operating in an operation system environment.

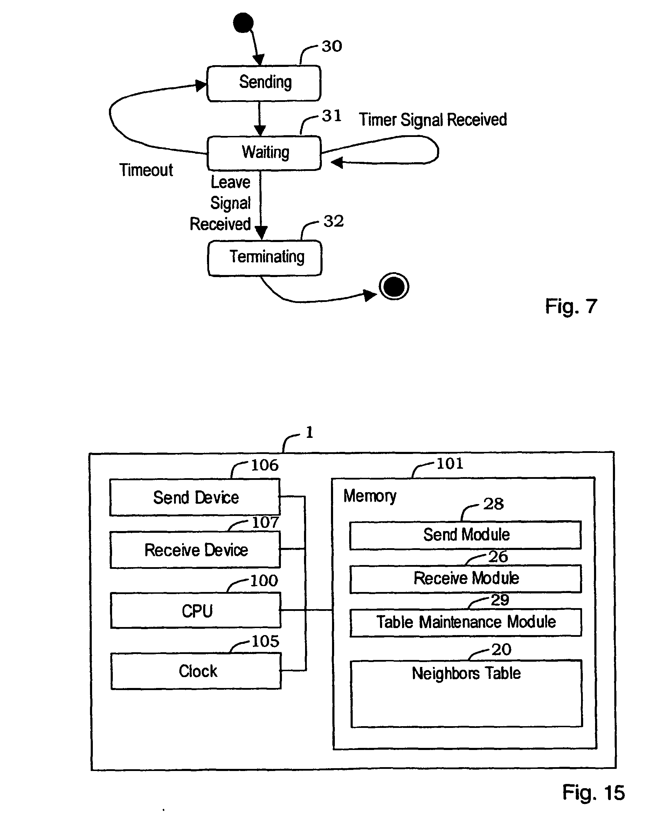

Fig. 7 shows schematically a state chart diagram for the operation of the send module 28. Control messages are transmitted to other network nodes in the sending state 30. Thereafter, the send module 28 proceeds to the waiting state 31. If a timeout from the timer means 7 is received, the send module 28 goes back to the sending state 30 for sending new control messages. If a receive signal is received by the send module 28, the timer 7 is rescheduled and the send module 28 returns to the waiting state 31. If a leave signal is received by the send module 28, it proceeds to the terminating step 32 for preparing the leaving of the network. This step is useful before the node 11 is switched off in order to inform other network nodes 12-14 about the upcoming termination of the node 11.

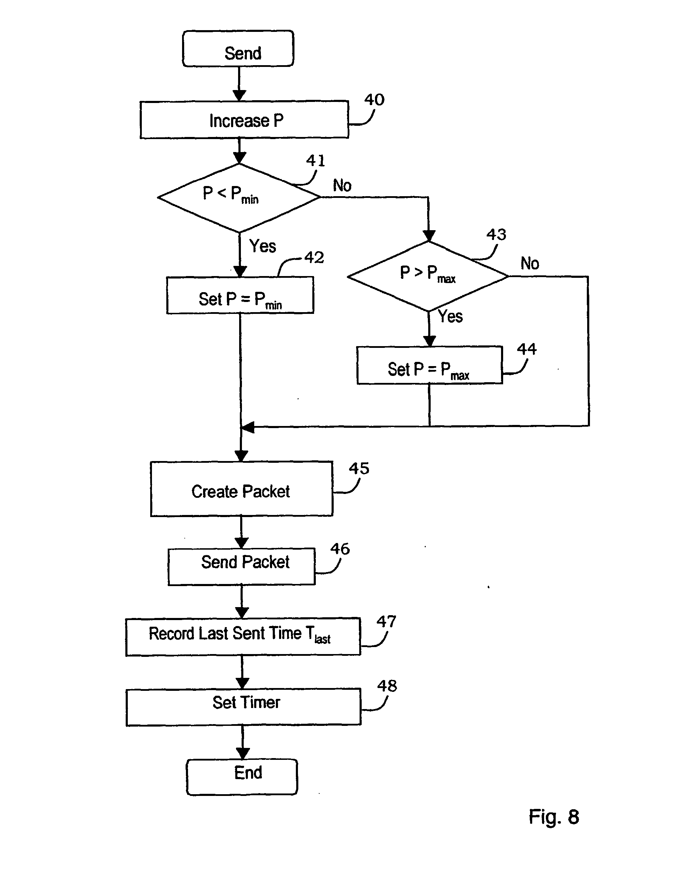

Fig. 8 shows a flow diagram of the control process performed by the send module 28 in the sending state 30. In step 40 the present sending time period P is multiplied by the constant C resulting in a new time period P.

In step 41 it is determined whether the new time period P is smaller than $P_{min}$. In the affirmative, time period P is set to $P_{min}$ in step 42. Otherwise, in step 43 it is determined if P is larger than $P_{max}$. In the affirmative, the time period P is set to $P_{max}$ in step 44. This processing in steps 41 to 44 ensures that the sending time period P is adjusted within the predetermined range determined by $P_{min}$ and $P_{max}$.

In step 45, a new control message ("Hello" packet) is created. The actual time period P is entered, e.g., in the "Hello" interval field of the "Hello" packet. This control packet is then sent in step 46 to other nodes 12-14 in the communication network 10.

The time of sending the control packet $T_{last}$ is recorded in step 47 and in step 48 the timer 7 is set according to the updated control message time period P.

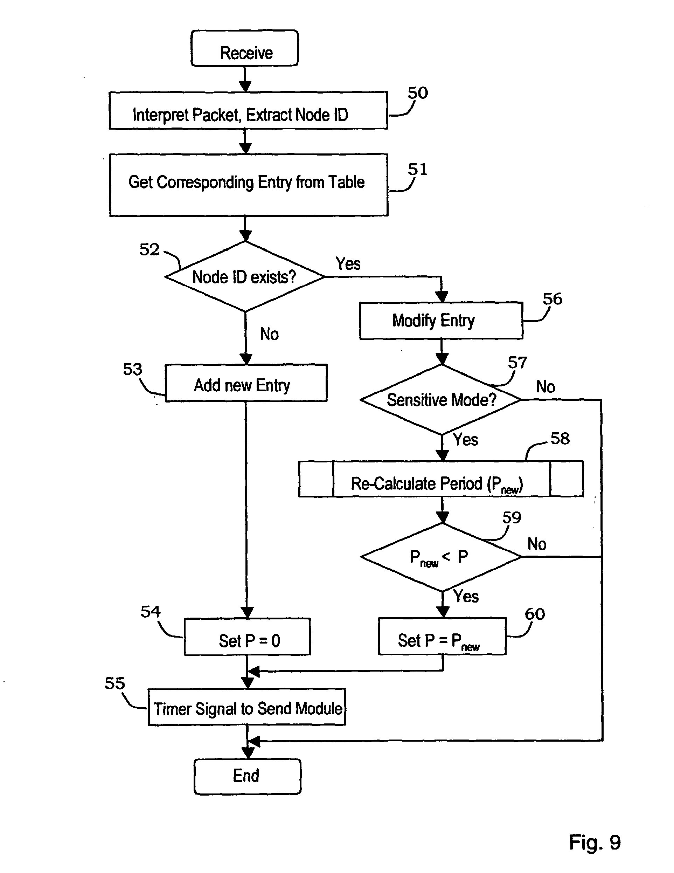

Fig. 9 shows a flow diagram illustrating schematically the control flow performed by the receive module 26. In step 50, a control message is received and interpreted. The network ID (IP address) of the originator of the control message is determined.

In step 51, the respective entry in the neighbors table 20 corresponding to the originator ID is searched. In step 52, it is determined whether a respective entry in the neighbors table 20 corresponding to the originator ID exists. If no such entry exists in the neighbors table, a new entry is created in step 53 filling in the information derived from the received control message. Since a new network node is detected indicating a change in the network (topology), the control message time P is reduced in step 54. Here, the sending time period P is set to zero. In step 55, a receive signal is sent to the send module 28 indicating that a new control message has been received.

If in step 52 it has been determined that a respective entry for the received control message exists, the entry is updated in step 56. This means that the last received time field 23, the sending period field 24 and the expiration time field 25 of the respective entry are updated. Since the new received control message from a network node confirms an active link to that network node, it is assumed that the corresponding information in the neighbors table 20 is valid and, thus, the respective expiration time $T_i$ of the node is extended.

In step 57, it is determined whether the sensitive operation mode is set. In the normal operation mode, a network node determines the network condition NC by detecting control messages from new network nodes. This allows the node to increase its sending time period P as long as no new network node is detected. By sending control messages less frequently, the bandwidth that the control messages consume is reduced. The normal mode supports many different situations in an ad-hoc network such as a conference situation where some network nodes meet temporarily in a certain area to form a stable network topology during the conference.

In the sensitive operation mode, network changes detected by other network nodes also result in the determination of an unstable network condition NC and, thus, a reduction of the sending time period P. This is achieved by adjusting the sending time period P of a network node based on the sending time periods $P_i$ of other network nodes which are received by the node together with the control messages sent by the other nodes. This mode allows the detection of local network changes by nodes and the adaptation of the time period P by other nodes in the entire network. However, it consumes more battery power, because control messages are sent more frequently if a network change is detected anywhere in the network. Furthermore, it takes more time to become stable when changes in the network (topology) occur, in particular when signal levels are not stable. The sensitive mode is appropriate in situations where, e. g., one mobile node is moving while the other nodes are immobile. For example, in a home network, a mobile terminal is moving around fixed equipment. In the sensitive mode, once the mobile node starts moving and the movement is detected by one fixed node, all network nodes reduce their sending time period P in order to allow the moving node to quickly update its neighbor table and maintaining the connection to the network.

In the sensitive mode, in step 58 a new time period $P_{new}$ is calculated and in step 59 it is determined, if $P_{new}$ is smaller than P, i.e. it has been decreased in step 58. In the affirmative, the sending time period P is set to $P_{new}$ in step 60. Thus, the time period P is reduced if the new time period $P_{new}$ is smaller than the current time period P of the node.

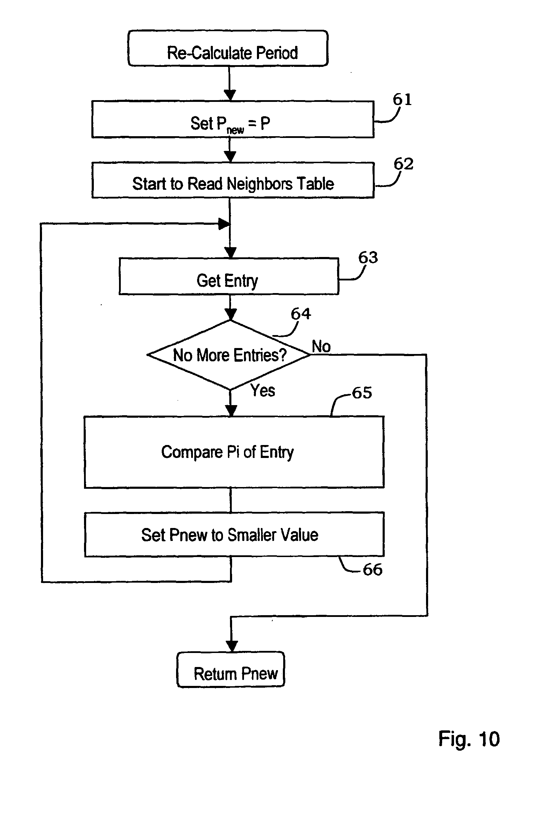

Fig. 10 shows schematically a flow diagram for the recalculation of time period $P_{new}$ (step 58). In step 61, $P_{new}$ is set to P and in step 62 the process continues to read the neighbors table 20. A new entry (row) of the neighbors table 20 is accessed in step 63. In step 64 is determined if more entries in the neighbors table 20 are available. If not, the recalculation process is complete and the sub procedure for recalculating the time period $P_{new}$ terminates by returning the current value of $P_{new}$.

In step 65, the current value of $P_{new}$ is compared against the time period $P_i$ stored in the period field 24 of the present entry in the neighbors table 20. If $P_i$ is smaller than $P_{new}$, $P_{new}$ is set to $P_i$ in step 66. This means that in steps 65 and 66 $P_{new}$ is adjusted if the current entry in the neighbors table 20 has a time period $P_i$ which is smaller than the current $P_{new}$.

By performing steps 61 to 66, the recalculation procedure selects the smallest time period $P_i$ listed for any neighbor node in the neighbors table 20 and returns this value as $P_{new}$. If this $P_{new}$ is also smaller than the current time period P of the node, the sending time period P is set to the smallest time period $P_i$ listed in the neighbors table 20.

According to an embodiment of the present invention, the impact of a detection of network instability in the sensitive operation mode is restricted locally and spatially in the network. This is useful to limit the impact of a network (membership) change in a large network to an area in the vicinity of the new network node, and to reduce the time necessary for stabilizing the time periods of network nodes after the network change detection. The limitation is achieved by increasing the sending time period P by multiplying it with a factor C before sending control messages including the time period updated in such a way (c.f. Fig. 8). Thus, the send out time period is increased compared to a received time period Pi from other nodes which was used in Fig. 10 to calculate Pnew.

For explanation, a network having nodes A, B, C, D, E, etc ... is considered and it is assumed that the nodes are arranged substantially on a line, i.e. they are connected in a simple chain. If node A detects a network change, it sets P = Pmin. When a control packet arrives from node A, node B sets P = C · Pmin. When a control packet arrives from node B, node C sets P = C^2 · Pmin. When a control packet arrives from node C, node D sets P = C^3 · Pmin, etc. Consequently, the spread of Pmin in the network is limited. Further, the limitation may be controlled by the magnitude of C. In general, C defines the time for the network to become stable from the point when a network change occurs until the point to be stable in global. The time for the network to become stable is given by: (Pmax-Pmin) / (C-1) .

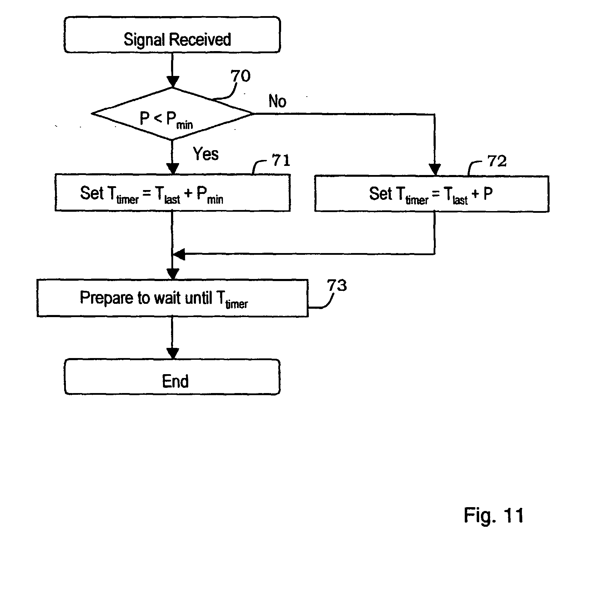

Fig. 11 shows a flow diagram of the timer process for the send module 28. This process is initiated when a timer signal is received. For example, in step 55 of the control process for the receive module 26 a timer signal is sent to the send module 28.

In step 70 it is determined, if the current time period P is smaller than $P_{min}$. This is the case, if, for example, in step 54 of the receive module process P is set to zero because a new node has been detected. If P < $P_{min}$ holds, the timer is rescheduled in step 71 according to the following equation:

$$T_{timer} = T_{last} + P_{min}$$

wherein $T_{last}$ is the time when the last control packet was sent. This time has been recorded in step 47 of the send module process. In step 72, the next timer triggering time $T_{timer}$ is calculated according to the following equation:

$$T_{timer} = T_{last} + P$$

In step 73, the timer 7 is rescheduled to trigger the sending means 6 when $T_{timer}$ arrives.

This timer process reschedules the timer 7 whenever a timer signal is received by calculating the next sending time $T_{timer}$ for control messages. According to the embodiment, a timer signal is received when changes in the network are detected by the receive module 26. Thus, the timer triggering time $T_{timer}$ is immediately updated and control messages are sent according to the updated timer interval. This allows a fast response to network changes.

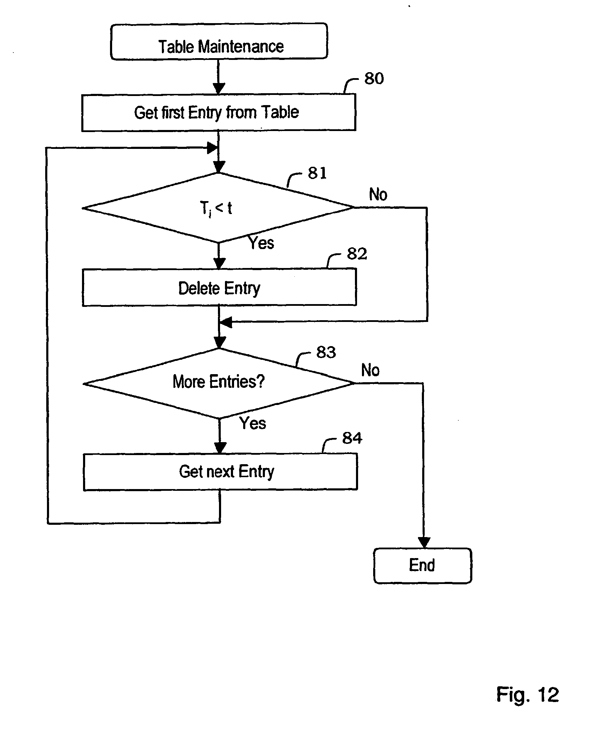

Fig. 12 shows schematically a flow diagram of the control process of the table maintenance module 29. The table maintenance module 29 is also triggered periodically by the timer means 7. The triggering period is set such that expired table entries are detected and deleted fast enough. The triggering of the table maintenance module 29 may be performed independently of the operation of the send module 28 and the receive module 26. Preferably, the triggering interval for the table maintenance module 29 is smaller than the minimum time period $P_{min}$.

In step 80, the first entry from the neighbor table 27 is accessed. In step 81, it is determined whether the expiration time $T_i$ of that entry has lapsed. This means that $T_i$ < current time t. In this case, the respective entry is deleted in step 82 from the neighbor table 20. In step 83, it is determined whether another entry in the table 20 exists. In the affirmative, the next entry is accessed in step 84 and the process continues with step 81; otherwise the table maintenance process terminates.

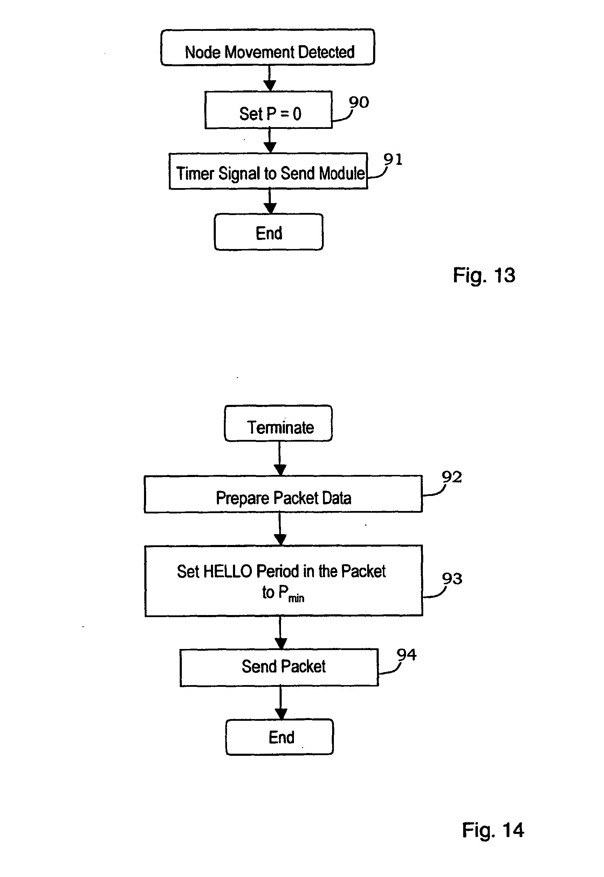

Fig. 13 shows a flow diagram illustrating schematically the process performed when a movement of the network node 11 is detected by the movement detection sensor 9 such as gravity sensor, a GPS, and/or a speedometer. If a movement is detected, the time period P is set to zero in step 90 and a timer signal is sent to the send module 28 in step 91. This triggers the processing of the timer process for the send module as shown in Fig. 11. Accordingly, the timer triggering time $T_{timer}$ is recalculated and the timer is rescheduled as explained for steps 70 to 73.

Fig. 14 shows schematically the process performed in the terminating state 32 of the send module 28 (see Fig. 7). If the network node intends to leave the network, *e. g.*, because it is soon going to be switched off, a new control message is prepared in step 92. In step 93, the sending period information in the control message is set to the minimum period $P_{min}$ and in step 94 the control packet is sent to other network nodes.

This termination process sends the minimum period $P_{min}$ to other nodes. Upon receiving the control message, the other network nodes calculate a new expiration time for the leaving node based on the received sending period $P_{min}$ of the leaving node. Thus, other nodes may detect the disappearance of the leaving node more quickly, because the respective expiration time for the leaving node in their network tables is reduced. This cuts the wait of the other nodes for receiving a control message of the leaving node short. In addition, network nodes in sensitive operation mode may reduce their respective sending time periods and, as a result to the changing network caused by the leaving node, send control messages more frequently. This allows a faster reorganization of the network topology when a node leaves the ad-hoc network.

Fig. 15 shows schematically a block diagram of the hardware structure of an ad-hoc network node comprising an apparatus according to the present invention.

A processing unit 100 (CPU) is provided to execute a program stored in a memory 101. In the memory 101 respective program instructions for instructing the CPU 100 to perform the process of the send module 28, the receive module 26, and the table maintenance module 29 are provided. The neighbors table 20 is also stored in memory 101. A clock 105 serves to control the system and to provide the timer means 7. A send device 106 and a receive device 107 have access to the communication network 10 and are used for implementing receiving means 2 and sending means 6.

According to the present invention the control message time period P of a network node is configured individually for each node. The determined time period may be informed to other nodes in the network using control messages. Preferably, the present invention is based on the exchange of "Hello" packets as control messages. If a change in the network is detected, the time period P is automatically shortened, and when the network is stable, *e. g.*, when all nodes are fixed, the time period is enlarged. This is achieved by inferring a network condition NC from received control messages. No additional hardware or equipment is required by this embodiment. According to a preferred embodiment of the invention, the movement of nodes is detected and the sending time period P is adjusted accordingly.

According to the present invention, the time to configure nodes in the network is reduced, because the sending time period P is adaptedly adjusted and no manual interaction is required. Furthermore, the bandwidth which is consumed by control messages in order to maintain the network is reduced. Because control messages are sent less frequently, battery power is consumed and the collision of packets is reduced. This is particularly important for wireless networks, because packet collisions happen frequently.

Although the above explained embodiment of the invention is based on a software implementation, the invention may also be implemented by a person skilled in the art using special purpose hardware components.

## Claims

1. Method for adjusting a control message time period P of a network node (11) used for sending control messages to other network nodes (12, 13, 14) in a communication network (10), wherein the communication network (10) includes at least two nodes (11 - 14), the method comprising the steps of:

   receiving control messages from other network nodes (12, 13, 14); **characterized in that** it further comprises the step of determining a network condition NC of at least part of the communication network (10); and
   adjusting the control message time period P of said network node (11) based on the determined network condition NC.

2. Method according to claim 1, wherein the network condition NC is determined based on received control messages.

3. Method according to claim 1 or 2, wherein the determination of the network condition comprises the detection of a change in network membership, including the detection of a new node and/or the leaving of a node.

4. Method according to at least one of claims 1 to 3, wherein the network condition NC is determined based on control message time periods $P_i$ of other network nodes (12, 13, 14).

5. Method according to at least one of claims 1 to 4, wherein the control message time period P is adjusted within a predetermined range.

6. Method according to at least one of claims 1 to 5, wherein the control message time period P is reset to a predetermined value when the network condition changes.

7. Method according to at least one of claims 1 to 6, wherein the control message time period P is increased as long as the network condition NC is stable.

8. Method according to claim 7, wherein the control message time period P is increased by multiplying with a coefficient C.

9. Method according to at least one of claims 1 to 8, wherein the control message time period P is adjusted gradually so that a maximum permissible number of control packet losses is not exceeded.

10. Method according to at least one of claims 1 to 9, wherein the control message time period P is decreased when the network condition NC degrades, in particular when a control message from a node (12, 13, 14) is received for which no control message has been received before and/or when no control message has been received from a node (12, 13, 14) for a certain amount of time.

11. Method according to at least one of claims 1 to 10, wherein a control message includes a time information from the sending node (11 - 14) concerning the time period $P_i$ and wherein a receiving node (11) stores the received time information of neighbor nodes (12, 13, 14).

12. Method according to at least one of claims 1 to 11, further comprising a determination of neighbor relation between said node (11) receiving a control message and the originator of the message (12, 13, 14).

13. Method according to at least one of claims 1 to 12, wherein said node (11) compares its own time period P with at least one received time period $P_i$ of other nodes (12, 13, 14), and if any received time period $P_i$ is smaller than its own time period P then it adjusts its time period P.

14. Method according to at least one of claims 1 to 13, further comprises a calculation of an expiration time $T_i$ for stored neighbor relation information based on the received time information included in the respective control message and/or the control message time period P of the sending node, and/or wherein a neighbor relation information relating to a node is deleted if no new control message is received from the other node (12, 13, 14) before the respective expiration time $T_i$ expires.

15. Method according to at least one of claims 1 to 14, wherein control messages are send to neighbor nodes (12, 13, 14) each time said time period P lapsed.

16. Method according to at least one of claims 1 to 15, wherein the determination of the network condition comprises the detection of a movement of the network node.

17. Usage of the method according to at least one of claims 1 to 16 in a routing protocol, in particular in a routing protocol for ad-hoc communication networks, to determine information relating to neighbor nodes in the communication network.

18. Apparatus for adjusting a control message time period P of a network node (11) used for sending control messages to other network nodes (12, 13, 14) in a communication network (10), wherein the communication network (10) includes at least two nodes (11 - 14), the apparatus comprising:

   receiving means (2) adapted to receive control messages from other network nodes (12, 13, 14); **characterized in that** it comprises:

   network condition determining means (3) adapted to determine a network condition NC of at least part of the communication network (10); and
   control means (4) adapted to adjust the control message time period P of said network node (11) based on the determined network condition NC.

19. Apparatus according to claim 18, wherein the network condition determining means (3) determine the network condition NC based on received control messages.

20. Apparatus according to claim 18 or 19, wherein the network condition determining means (3) determine changes in network membership, including the detection of a new node and/or a leaving node.

21. Apparatus according to at least one of claims 18 to 20, comprising a storing means (5) configured to store a neighbor table (20), wherein the neighbor table (20) stores information relating to neighboring network nodes (12, 13, 14), and wherein a new network node is detected by comparing a received control message with entries in the neighbor table (20).

22. Apparatus according to at least one of claims 18 to 21, comprising sending means (6) adapted to send control messages to neighbor nodes (12, 13, 14) and timer means (7) adapted to trigger the sending means (6) for sending of control messages each time the time period P lapsed, wherein the timer means (7) are rescheduled according to the control message time period P.

23. Apparatus according to at least one of claims 18 to 22, wherein the control means (4) compares the time period P of the node (11) with at least one received time period $P_i$ of other nodes (12, 13, 14), and if any received time period $P_i$ is smaller than the own time period P it adjusts the time period P.

24. Apparatus according to at least one of claims 18 to 23, comprising table maintenance means (8) adapted to maintain the entries in the neighbor table (20), in particular to delete neighbor table entries having an expired expiration time $T_i$.

25. Apparatus according to at least one of claims 18 to 24, comprising a movement detection sensor (9) to detect the movement of the node (11), wherein the control message time period P is adjusted depending on the detected movement.

26. Computer program product directly loadable into the internal memory of a digital computer, comprising software code portions for performing the steps of at least one of claims 1 to 16 when said product is run on the computer.

27. Computer program product stored on a computer usable medium, comprising computer readable program means for causing a computer to perform the steps of at least one of claims 1 to 16 when said product is run on the computer.

**Patentansprüche**

1. Verfahren zum Einstellen einer Steuernachricht-Zeitperiode P eines Netzknotens (11), der verwendet wird, um Steuernachrichten zu anderen Netzknoten (12, 13, 14) in einem Kommunikationsnetz (10) zu senden, wobei das Kommunikationsnetz (10) wenigstens zwei Knoten (11-14) enthält, wobei das Verfahren den folgenden Schritt umfasst:

   Empfangen von Steuernachrichten von anderen Netzknoten (12, 13, 14); **dadurch gekennzeichnet, dass** es ferner die folgenden Schritte umfasst:

   Bestimmen eines Netzzustandes NC wenigstens für einen Teil des Kommunikationsnetzes (10); und
   Einstellen der Steuernachricht-Zeitperiode P des Netzknotens (11) anhand des bestimmten Netzzustandes NC.

2. Verfahren nach Anspruch 1, bei dem der Netzzustand NC anhand empfangener Steuernachrichten bestimmt wird.

3. Verfahren nach Anspruch 1 oder 2, bei dem die Bestimmung des Netzzustandes das Erfassen einer Änderung der Netz-Mitgliedschaft einschließlich der Erfassung eines neuen Knotens und/oder des Wegfalls eines Knotens umfasst.

4. Verfahren nach wenigstens einem der Ansprüche 1 bis 3, bei dem der Netzzustand NC anhand von Steuernachricht-Zeitperioden $P_i$ anderer Netzknoten (12, 13, 14) bestimmt wird.

5. Verfahren nach wenigstens einem der Ansprüche 1 bis 4, bei dem die Steuernachricht-Zeitperiode P innerhalb eines vorgegebenen Bereichs eingestellt wird.

6. Verfahren nach wenigstens einem der Ansprüche 1 bis 5, bei dem die Steuernachricht-Zeitperiode P auf einen vorgegebenen Wert zurückgesetzt wird, wenn sich der Netzzustand ändert.

7. Verfahren nach wenigstens einem der Ansprüche 1 bis 6, bei dem die Steuernachricht-Zeitperiode P erhöht wird, solange der Netzzustand NC stabil ist.

8. Verfahren nach Anspruch 7, bei dem die Steuernachricht-Zeitperiode P durch Multiplikation mit einem Koeffizienten C erhöht wird.

9. Verfahren nach wenigstens einem der Ansprüche 1 bis 8, bei dem die Steuernachricht-Zeitperiode P graduell eingestellt wird, so dass eine maximal zulässige Anzahl von Steuerpaketverlusten nicht überschritten wird.

10. Verfahren nach wenigstens einem der Ansprüche 1 bis 9, bei dem die Steuernachricht-Zeitperiode P verringert wird, wenn sich der Netzzustand NC verschlechtert, insbesondere dann, wenn eine Steuernachricht von einem Knoten (12, 13, 14) empfangen wird, für den vorher keine Steuernachricht empfangen worden ist, und/oder wenn während einer bestimmten Zeitdauer keine Steuernachricht von einem Knoten (12, 13, 14) empfangen worden ist.

11. Verfahren nach wenigstens einem der Ansprüche 1 bis 10, bei dem eine Steuernachricht Zeitinformationen von dem sendenden Knoten (11-14) bezüglich der Zeitperiode ($P_i$) enthält und bei dem ein empfangender Knoten (11) die empfangenen Zeitinformationen von Nachbarknoten (12, 13, 14) speichert.

12. Verfahren nach wenigstens einem der Ansprüche 1 bis 11, das ferner eine Bestimmung einer Nachbarbeziehung zwischen dem Knoten (11), der eine Steuernachricht empfängt, und dem Ausgangspunkt der Nachricht (12, 13, 14) umfasst.

13. Verfahren nach wenigstens einem der Ansprüche 1 bis 12, bei dem der Knoten (11) seine eigene Zeitperiode P mit wenigstens einer empfangenen Zeitperiode $P_i$ anderer Knoten (12, 13, 14) vergleicht und dann, wenn irgendeine empfangene Zeitperiode $P_i$ kleiner als seine eigene Zeitperiode P ist, seine Zeitperiode P einstellt.

**14.** Verfahren nach wenigstens einem der Ansprüche 1 bis 13, das ferner eine Berechnung einer Ablaufzeit $T_i$ für gespeicherte Nachbarbeziehungsinformationen anhand der in der entsprechenden Steuernachricht enthaltenen empfangenen Zeitinformationen und/oder der Steuernachricht-Zeitperiode P des sendenden Knotens umfasst und/oder bei dem Nachbarbeziehungsinformationen bezüglich eines Knotens gelöscht werden, falls vor Ablauf der jeweiligen Ablaufzeit $T_i$ keine neue Steuernachricht von dem anderen Knoten (12, 13, 14) empfangen wird.

**15.** Verfahren nach wenigstens einem der Ansprüche 1 bis 14, bei dem jedes Mal Steuernachrichten zum Nachbarknoten (12, 13, 14) gesendet werden, wenn die Zeitperiode P verstrichen ist.

**16.** Verfahren nach wenigstens einem der Ansprüche 1 bis 15, bei dem die Bestimmung des Netzzustandes die Erfassung einer Bewegung des Netzknotens umfasst.

**17.** Verwendung des Verfahrens nach wenigstens einem der Ansprüche 1 bis 16 in einem Router-Protokoll, insbesondere in einem Router-Protokoll für ad-hoc-Kommunikationsnetze, um Informationen bezüglich Nachbarknoten in dem Kommunikationsnetz zu bestimmen.

**18.** Vorrichtung zum Einstellen einer Steuernachricht-Zeitperiode P eines Netzknotens (11), der zum Senden von Steuernachrichten zu anderen Netzknoten (12, 13, 14) in einem Kommunikationsnetz (10) verwendet wird, wobei das Kommunikationsnetz (10) wenigstens zwei Knoten (11-14) enthält, wobei die Vorrichtung umfasst:

Empfangsmittel (2), die so beschaffen sind, dass sie Steuernachrichten von anderen Netzknoten (12, 13, 14) empfangen;

**dadurch gekennzeichnet, dass** sie umfasst:

Netzzustand-Bestimmungsmittel (3), die so beschaffen sind, dass sie einen Netzzustand NC wenigstens eines Teils des Kommunikationsnetzes (10) bestimmen; und
Steuermittel (4), die so beschaffen sind, dass sie die Steuernachricht-Zeitperiode P des Netzknotens (11) anhand des bestimmten Netzzustandes NC einstellen.

**19.** Vorrichtung nach Anspruch 18, bei der die Netzzustand-Bestimmungsmittel (3) den Netzzustand NC anhand empfangener Steuernachrichten bestimmen.

**20.** Vorrichtung nach Anspruch 18 oder 19, bei der die Netzzustand-Bestimmungsmittel (3) Änderungen der Netz-Mitgliedschaft einschließlich der Erfassung eines neuen Knotens und/oder eines wegfallenden Knotens bestimmen.

**21.** Vorrichtung nach wenigstens einem der Ansprüche 18 bis 20, die ein Speichermittel (5) umfasst, das so konfiguriert ist, dass es eine Nachbartabelle (20) speichert, wobei die Nachbartabelle (20) Informationen bezüglich benachbarter Netzknoten (12, 13, 14) speichert und wobei ein neuer Netzknoten durch Vergleichen einer empfangenen Steuernachricht mit Einträgen in der Nachbartabelle (20) erfasst wird.

**22.** Vorrichtung nach wenigstens einem der Ansprüche 18 bis 21, die Sendemittel (6), die so beschaffen sind, dass sie Steuernachrichten zu Nachbarknoten (12, 13, 14) senden, und Zeitgebermittel (7), die so beschaffen sind, dass sie die Sendemittel (6) triggern, um jedes Mal Steuernachrichten zu senden, wenn die Zeitperiode P verstrichen ist, umfasst, wobei die Zeitsteuerung der Zeitgebermittel (7) entsprechend der Steuernachricht-Zeitperiode P neu eingestellt wird.

**23.** Vorrichtung nach wenigstens einem der Ansprüche 18 bis 22, bei der die Steuermittel (4) die Zeitperiode P des Knotens (11) mit wenigstens einer empfangenen Zeitperiode $P_i$ anderer Knoten (12, 13, 14) vergleichen und dann, wenn irgendeine empfangene Zeitperiode $P_i$ kleiner als die eigene Zeitperiode P ist, die Zeitperiode P einstellen.

**24.** Vorrichtung nach wenigstens einem der Ansprüche 18 bis 23, die Tabellenwartungsmittel (8) umfasst, die so beschaffen sind, dass sie die Einträge in der Nachbartabelle (20) warten und insbesondere Nachbartabelleneinträge, deren Ablaufzeit $T_i$ abgelaufen ist, löschen.

**25.** Vorrichtung nach wenigstens einem der Ansprüche 18 bis 24, die einen Bewegungserfassungssensor (9) umfasst, der die Bewegung des Knotens (11) erfasst, wobei die Steuernachricht-Zeitperiode P in Abhängigkeit von der erfassten Bewegung eingestellt wird.

**26.** Computerprogrammprodukt, das direkt in den internen Speicher eines digitalen Computers geladen werden kann und Softwarecode-Abschnitte umfasst, um die Schritte wenigstens eines der Ansprüche 1 bis 16 auszuführen, wenn das Produkt auf dem Computer abläuft.

**27.** Computerprogrammprodukt, das in einem computerlesbaren Medium gespeichert ist und computerlesbare Programmmittel enthält, um einen Computer dazu zu veranlassen, die Schritte nach wenigstens einem der Ansprüche 1 bis 16 auszuführen, wenn das Produkt auf dem Computer abläuft.

## Revendications

1. Méthode pour ajuster une période de temps pour l'envoi de messages de contrôle P d'un noeud de réseau (11) utilisé pour envoyer des messages de contrôle à d'autres noeuds de réseau (12, 13, 14) dans un réseau de communication (10), dans lequel le réseau de communication (10) inclut au moins deux noeuds (11-14), la méthode comprenant les étapes de:

   réception des messages de contrôle provenant d'autres noeuds de réseau (12, 13, 14); **caractérisée en ce qu'**elle comprend également l'étape de détermination d'un état du réseau ER d'au moins une partie du réseau de communication (10); et d'ajustement de la période de temps pour l'envoi de messages de contrôle P dudit noeud de réseau (11) en se basant sur l'état du réseau déterminé ER.

2. Méthode selon la revendication 1, dans laquelle l'état du réseau ER est déterminé en se basant sur les messages de contrôle reçus.

3. Méthode selon la revendication 1 ou 2, dans laquelle la détermination de l'état du réseau comprend la détection d'un changement d'adhésion au réseau, y compris la détection d'un nouveau noeud et/ou le départ d'un noeud.

4. Méthode selon au moins l'une des revendications 1 à 3, dans laquelle l'état du réseau ER est déterminé en se basant sur les périodes de temps pour l'envoi des messages de contrôle $P_i$ des autres noeuds de réseau (12, 13, 14).

5. Méthode selon au moins l'une des revendications 1 à 4, dans laquelle la période de temps pour l'envoi de messages de contrôle P est ajustée dans une plage déterminée au préalable.

6. Méthode selon au moins l'une des revendications 1 à 5, dans laquelle la période de temps pour l'envoi de messages de contrôle P est réajustée à une valeur déterminée au préalable lorsque l'état du réseau change.

7. Méthode selon au moins l'une des revendications 1 à 6, dans laquelle la période de temps pour l'envoi de messages de contrôle P est augmentée tant que l'état du réseau ER est stable.

8. Méthode selon la revendication 7, dans laquelle la période de temps pour l'envoi de messages de contrôle P est augmentée par une multiplication avec un coefficient C.

9. Méthode selon au moins l'une des revendications 1 à 8, dans laquelle la période de temps pour l'envoi de messages de contrôle P est ajustée progressivement de sorte qu'un nombre maximum autorisé de pertes de paquets de contrôle n'est pas dépassé.

10. Méthode selon au moins l'une des revendications 1 à 9, dans laquelle la période de temps pour l'envoi de messages de contrôle P est diminuée lorsque l'état du réseau ER se détériore, notamment lorsqu'un message de contrôle est reçu en provenance d'un noeud (12, 13, 14) pour lequel aucun message de contrôle n'a été reçu auparavant et/ou lorsque aucun message de contrôle n'a été reçu en provenance d'un noeud (12, 13, 14) pendant un certain temps.

11. Méthode selon au moins l'une des revendications 1 à 10, dans laquelle un message de contrôle inclut une information temporelle provenant du noeud d'envoi (11-14) concernant la période de temps $P_i$ et dans lequel un noeud de réception (11) stocke l'information temporelle reçue des noeuds voisins (12, 13, 14).

12. Méthode selon au moins l'une des revendications 1 à 11, comprenant également une détermination de la relation de voisinage entre ledit noeud (11) recevant un message de contrôle et le noeud envoyant le message (12, 13, 14).

13. Méthode selon au moins l'une des revendications 1 à 12, dans laquelle ledit noeud (11) compare sa propre période de temps P avec au moins une période de temps reçue $P_i$ des autres noeuds (12, 13, 14), et si toute période de temps reçue $P_i$ est inférieure à sa propre période de temps P, alors il ajuste sa période de temps P.

14. Méthode selon au moins l'une des revendications 1 à 13, comprenant également un calcul d'un temps d'expiration $T_i$ pour les informations stockées sur la relation de voisinage en se basant sur l'information temporelle reçue incluse dans le message de contrôle respectif et/ou la période de temps pour l'envoi de messages de contrôle P du noeud d'envoi, et/ou dans laquelle une information sur la relation de voisinage relative à un noeud est supprimée si aucun nouveau message de contrôle n'est reçu de l'autre noeud (12, 13, 14) avant que le temps d'expiration respectif $T_i$ n'expire.

15. Méthode selon au moins l'une des revendications 1

31 **EP 1 511 234 B1** 32

à 14, dans laquelle les messages de contrôle sont envoyés à des noeuds voisins (12, 13, 14) chaque fois que ladite période de temps P a expiré.

16. Méthode selon au moins l'une des revendications 1 à 15, dans laquelle la détermination de l'état du réseau comprend la détection d'un mouvement du noeud de réseau.

17. L'utilisation de la méthode selon au moins l'une des revendications 1 à 16 dans un protocole de routage, notamment dans un protocole de routage pour des réseaux de communication ad-hoc, pour déterminer les informations relatives aux noeuds voisins dans le réseau de communication.

18. Dispositif pour ajuster une période de temps pour l'envoi de messages de contrôle P d'un noeud de réseau (11) utilisé pour envoyer des messages de contrôle à d'autres noeuds de réseau (12, 13, 14) dans un réseau de communication (10), dans lequel le réseau de communication (10) inclut au moins deux noeuds (11 - 14), le dispositif comprenant:

un moyen de réception (2) adapté pour recevoir les messages de contrôle provenant d'autres noeuds de réseau (12, 13, 14); **caractérisé en ce qu'**il comprend:

un moyen de détermination de l'état du réseau (3) adapté pour déterminer un état du réseau ER d'au moins une partie du réseau de communication (10); et
un moyen de contrôle (4) adapté pour ajuster la période de temps pour l'envoi de messages de contrôle P dudit noeud de réseau (11) en se basant sur l'état du réseau déterminé ER.

19. Dispositif selon la revendication 18, dans lequel le moyen de détermination de l'état du réseau (3) détermine l'état du réseau ER en se basant sur les messages de contrôle reçus.

20. Dispositif selon la revendication 18 ou 19, dans lequel le moyen de détermination de l'état du réseau (3) détermine les changements d'adhésion au réseau, y compris la détection d'un nouveau noeud et/ou d'un noeud de départ.

21. Dispositif selon au moins l'une des revendications 18 à 20, comprenant un moyen de stockage (5) configuré pour stocker une table de voisinage (20), dans lequel la table de voisinage (20) stocke les informations relatives aux noeuds de réseau voisins (12, 13, 14) et dans lequel un nouveau noeud de réseau est détecté en comparant un message de contrôle reçu avec les entrées de la table de voisinage (20).

22. Dispositif selon au moins l'une des revendications 18 à 21, comprenant un moyen d'envoi (6) adapté pour envoyer des messages de contrôle à des noeuds voisins (12, 13, 14) et un minuteur (7) adapté pour déclencher le moyen d'envoi (6) permettant d'envoyer des messages de contrôle chaque fois que la période de temps P a expiré, dans lequel le minuteur (7) est reprogrammé selon la période de temps pour l'envoi de messages de contrôle P.

23. Dispositif selon au moins l'une des revendications 18 à 22, dans lequel le moyen de contrôle (4) compare la période de temps P du noeud (11) avec au moins une période de temps reçue $P_i$ des autres noeuds (12, 13, 14) et si toute période de temps reçue $P_i$ est inférieure à sa propre période de temps P, il ajuste la période de temps P.

24. Dispositif selon au moins l'une des revendications 18 à 23, comprenant un moyen de maintenance de la table (8) adapté pour maintenir les entrées dans la table de voisinage (20), notamment pour supprimer les entrées de la table de voisinage ayant un temps d'expiration expiré $T_i$.

25. Dispositif selon au moins l'une des revendications 18 à 24, comprenant un détecteur de mouvement (9) pour détecter le mouvement du noeud (11), dans lequel la période de temps pour l'envoi de messages de contrôle P est ajustée selon le mouvement détecté.

26. Produit de programme informatique directement chargeable dans la mémoire interne d'un ordinateur numérique, comprenant des parties de codes logiciels pour réaliser les étapes d'au moins l'une des revendications 1 à 16 lorsque ledit produit fonctionne sur l'ordinateur.

27. Produit de programme informatique stocké sur un support informatique utilisable, comprenant un dispositif de programme informatique lisible pour faire réaliser à un ordinateur les étapes d'au moins l'une des revendications 1 à 16 lorsque ledit produit fonctionne sur l'ordinateur.

**17**

Fig. 1

((▽))

B

12

((▽))

C

13

▽

A

11

◄─── 10

((▽))

D

14

Fig. 2a

▽

B

12

▽

C

13

▽

A

11

◄─── 10

| Neighbors |
|-----------|
| B |
| C |
| D |

20

▽

D

14

Fig. 2b

○ Ad-hoc Node

Fig. 3a

○ Ad-hoc Node

Fig. 3b

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|    Type = 2       |   Length = 4   |       Hello Interval        |
+-+-+-+-+-+-+-+-+-+-+-+-+-+-+-+-+-+-+-+-+-+-+-+-+-+-+-+-+-+-+-+-+
|      Hello Interval, continued   |
+-+-+-+-+-+-+-+-+-+-+-+-+-+-+-+-+-+
```

Fig. 4

| ID | Status | Last Received Time $T_{rcv}$ | Period Pi | Expiration Time Ti |
|----|--------|------------------------------|-----------|--------------------|
| 21 | 22 | 23 | 24 | 25 |
|    |        |                              |           |                    |
|    |        |                              |           |                    |
|    |        |                              |           |                    |

20

Fig. 5

Fig. 6

Fig. 7

Fig. 15

```
          ┌──────────────┐
          │     Send     │
          └──────────────┘
                 │
                 ▼
        ┌──────────────────┐  40
        │    Increase P    │
        └──────────────────┘
                 │
                 ▼
          ╱────────────╲  41
         ╱              ╲         No
        ╱   P < P_min    ╲───────────────┐
        ╲                ╱                │
         ╲              ╱                 ▼
          ╲────────────╱           ╱────────────╲  43
                 │                ╱              ╲       No
               Yes              ╱   P > P_max     ╲──────────┐
                 │              ╲                 ╱          │
                 ▼               ╲              ╱            │
        ┌──────────────────┐  42  ╲────────────╱            │
        │  Set P = P_min   │            │                   │
        └──────────────────┘          Yes                   │
                 │                      │                    │
                 │                      ▼                    │
                 │             ┌──────────────────┐  44      │
                 │             │  Set P = P_max   │          │
                 │             └──────────────────┘          │
                 │                      │                    │
                 │◄─────────────────────┴────────────────────┘
                 ▼
        ┌──────────────────┐  45
        │   Create Packet  │
        └──────────────────┘
                 │
                 ▼
        ┌──────────────────┐  46
        │   Send Packet    │
        └──────────────────┘
                 │
                 ▼
   ┌────────────────────────────┐  47
   │ Record Last Sent Time T_last│
   └────────────────────────────┘
                 │
                 ▼
        ┌──────────────────┐  48
        │    Set Timer     │
        └──────────────────┘
                 │
                 ▼
          ┌──────────────┐
          │     End      │
          └──────────────┘
```

Fig. 8

Fig. 9

Re-Calculate Period

Set P$_{new}$ = P — 61

Start to Read Neighbors Table — 62

Get Entry — 63

No More Entries? — 64

No

Yes

Compare Pi of Entry — 65

Set Pnew to Smaller Value

66

Return Pnew

Fig. 10

```
          ┌──────────────────────┐
          │    Signal Received   │
          └──────────────────────┘
                     │
                     ▼        70
                  ╱──────╲
                 ╱        ╲      No
                ╱ P < Pmin ╲──────────────────────────┐
                ╲          ╱                           │
                 ╲        ╱                            │
                  ╲──────╱                             │
                     │ Yes      71                     │    72
                     ▼                                 ▼
    ┌──────────────────────────────┐   ┌──────────────────────────────┐
    │  Set Ttimer = Tlast + Pmin   │   │    Set Ttimer = Tlast + P     │
    └──────────────────────────────┘   └──────────────────────────────┘
                     │                                 │
                     ◄─────────────────────────────────┘
                     ▼
    ┌──────────────────────────────┐  73
    │  Prepare to wait until Ttimer │
    └──────────────────────────────┘
                     │
                     ▼
          ┌──────────────────────┐
          │         End          │
          └──────────────────────┘
```

Fig. 11

```
                    ┌─────────────────────────┐
                    │   Table Maintenance     │
                    └─────────────────────────┘
                                │            ┌─ 80
                                ▼
              ┌──────────────────────────────────┐
              │     Get first Entry from Table    │
              └──────────────────────────────────┘
                                │
        ┌──────────────────────►│         ┌─ 81
        │                       ▼
        │                   ╱───────────╲              No
        │                  ╱   T_i < t    ╲────────────────┐
        │                  ╲             ╱                 │
        │                   ╲───────────╱                  │
        │                        │ Yes       ┌─ 82         │
        │                        ▼                         │
        │            ┌──────────────────────┐              │
        │            │     Delete Entry      │             │
        │            └──────────────────────┘              │
        │                        │◄────────────────────────┘
        │                        ▼          ┌─ 83
        │                    ╱───────────╲            No
        │                   ╱ More Entries?╲──────────────┐
        │                   ╲             ╱               │
        │                    ╲───────────╱                │
        │                         │ Yes      ┌─ 84        │
        │                         ▼                       │
        │            ┌──────────────────────┐             │
        │            │     Get next Entry    │            │
        └────────────└──────────────────────┘            │
                                                          ▼
                                              ┌──────────────────┐
                                              │       End        │
                                              └──────────────────┘
```

**Fig. 12**

```
┌─────────────────────────────┐
│   Node Movement Detected    │
└─────────────────────────────┘
              │
              ▼
      ┌───────────────┐
      │   Set P = 0   │⟍ 90
      └───────────────┘
              │
              ▼
  ┌───────────────────────────┐
  │ Timer Signal to Send Module│⟍ 91
  └───────────────────────────┘
              │
              ▼
        ┌───────────┐
        │    End    │
        └───────────┘
```

**Fig. 13**

```
      ┌───────────────┐
      │   Terminate   │
      └───────────────┘
              │
              ▼
  ┌───────────────────────────┐
  │     Prepare Packet Data    │⟍ 92
  └───────────────────────────┘
              │
              ▼
  ┌───────────────────────────┐
  │ Set HELLO Period in the Packet│
  │           to P_min         │⟍ 93
  └───────────────────────────┘
              │
              ▼
      ┌───────────────┐
      │  Send Packet  │⟍ 94
      └───────────────┘
              │
              ▼
        ┌───────────┐
        │    End    │
        └───────────┘
```

**Fig. 14**